# EUROPÄISCHE PATENTSCHRIFT

(11) **EP 2 379 996 B1**
(45) Veröffentlichungstag und Bekanntmachung des Hinweises auf die Patenterteilung: **13.04.2016**
(21) Anmeldenummer: 09752129.8
(22) Anmeldetag: 16.11.2009
(51) Int. Cl.: G01G 7/02, G01G 21/24, G01G 23/00

(54) **OBERSCHALIGE WAAGE**
TOP-PAN BALANCE
BALANCE À PLATEAU SUPÉRIEUR

(30) Priorität: 17.12.2008 DE 102008062742
(43) Veröffentlichungstag der Anmeldung: 26.10.2011
(73) Patentinhaber: Sartorius Lab Instruments GmbH & Co. KG, 37075 Göttingen (DE)
(72) Erfinder: ERBEN, Detlev, 37078 Göttingen (DE); COVIC, Helga, 37083 Göttingen (DE); DÖRNER, Jochen, 37085 Göttingen (DE)
(86) Internationale Anmeldenummer: PCT/EP2009/008129
(87) Internationale Veröffentlichungsnummer: WO 2010/075910

(56) Entgegenhaltungen:
- DE-C1- 19 511 353
- US-A- 5 082 073
- US-A- 5 604 334
- US-A- 5 721 398
- US-A- 5 844 174

## Beschreibung

Die Erfindung bezieht sich auf eine oberschalige Waage mit einer Waagschale, mit einem Wägesystem, dessen Lastaufnehmer durch einen oberen Lenker und einen unteren Lenker als Parallelführung in senkrechter Richtung beweglich mit gehäusefesten Fixpunkten des Wägesystems verbunden ist, und mit einer Überlastsicherung, wobei zur Überlastsicherung die Waagschale an einem Waagschalenträger befestigt ist, der über eine Hilfsparallelführung und über ein vorgespanntes Federelement mit dem Lastaufnehmer verbunden ist, wodurch die Waagschale im zulässigen Wägebereich starr mit dem Lastaufnehmer gekoppelt ist, jedoch bei Überschreiten des zulässigen Wägebereiches nur noch elastisch nachgiebig mit dem Lastaufnehmer gekoppelt ist, und wobei mindestens ein gehäusefester Begrenzungsanschlag vorhanden ist, der die elastische Ausweichbewegung der Waagschale und des Waagschalenträgers bei Überlast begrenzt.

Waagen mit Überlastsicherungen dieser Art sind z. B. aus der DE 28 30 345 A1 bekannt. Die dort gezeichnete Ausführungsform nimmt jedoch erheblichen Platz in Anspruch, sodass die Gehäusegröße der Waage durch die Überlastsicherung zunimmt. Außerdem besteht die Überlastsicherung aus einer Vielzahl von Teilen, sodass die Montage aufwendig ist.

Eine deutlich kompaktere und aus weniger Teilen bestehende Ausführung ist schon aus der DE 101 61 517 B4 bekannt. Diese Ausführungsform hat sich bewährt.

Aufgabe der Erfindung ist es nun, eine Waage der eingangs genannten Art mit einer weiteren Funktionalität auszustatten, ohne das erforderliche Bauvolumen des Wägesystems zu vergrößern.

Erfindungsgemäß wird dies dadurch erreicht, dass zwischen Waagschalenträger und Lastaufnehmer zusätzlich ein Ecklastsensor vorgesehen ist, dass der Ecklastsensor und die Überlastsicherung eine gemeinsame Baugruppe (7) bilden, wobei der Ecklastsensor in Kraftflussrichtung von der Waagschale zum Lastaufnehmer (4) hinter der Überlastsicherung angeordnet ist und aus mindestens drei senkrecht stehenden Materialdünnstellen besteht, auf denen Dehnungsmessstreifen appliziert sind, und dass die Baugruppe (7) an der den Lenkern (2, 3) zugewandten Seite des Lastaufnehmers (4) befestigt ist und sich in den Raum zwischen den Lenkern (2, 3) hinein erstreckt.

Ecklastsensoren bei Waagen sind im Prinzip schon bekannt. Z. B. zeigt die DE 30 03 862 C2 einen Ecklastsensor mit Dehnungsmessstreifen an einem senkrechten Tragelement direkt unter der Waagschale. Dieser Ecklastsensor muss jedoch für die maximale Überlast, die die Waage ohne Beschädigung aushalten soll, dimensioniert werden. Dadurch lassen sich aber keine ausreichenden Ecklastsignale aus den Dehnungsmessstreifen gewinnen. - Dasselbe gilt für den Ecklastsensor in der DE 10 2006 031 950 B3, der zwischen Waagschale und Unterschale einer Waage nachträglich einbaubar ist.

Im Gegensatz dazu ist in der erfindungsgemäßen Kombination von Ecklastsensor und Überlastsicherung in einer gemeinsamen Baugruppe der Ecklastsensor hinter der Überlastsicherung angeordnet, wodurch der Ecklastsensor höchstens bis zur Ansprechschwelle der Überlastsicherung belastet wird. Dadurch können die Materialdünnstellen des Ecklastsensors deutlich dünner gestaltet werden und die applizierten Dehnungsmessstreifen liefern ein deutlich größeres Ecklastsignal.

Die DE 30 03 862 C2 zeigt außerdem - genauso wie die DE 196 32 709 C1 - Ecklastsensoren mit Dehnungsmessstreifen an den gehäusefesten Abstützstellen der Lenker des Wägesystems, die die waagerechten Kräfte bei außermittiger Lage des Wägegutes erfassen. Damit diese Ecklastsensoren ein brauchbares Signal abgeben, müssen die gehäusefesten Abstützstellen der Lenker jedoch eine - wenn auch kleine - Nachgiebigkeit aufweisen. Diese führt jedoch zu einer Änderung der Geometrie der Parallelführung und beeinflusst dadurch die Ecklast der Parallelführung. Auch hier ergibt sich das Problem, dass ein stabiles Verhalten der

Parallelführung bei Eckenbelastung möglichst stabile Abstützpunkte der Lenker erfordert, während der Wunsch nach einem genügend großen Ausgangssignal der Ecklastsensoren nachgiebigere Abstützpunkte erfordert.

Im Gegensatz dazu beeinflusst der erfindungsgemäß zusammen mit der Überlastsicherung zwischen Waagschalenträger und Lastaufnehmer vorgesehene Ecklastsensor die Parallelführung des Wägesystems in keiner Weise. Die Auslegung der Parallelführung kann ohne Rücksicht auf den Ecklastsensor optimiert werden; und der Ecklastsensor kann ohne Rücksicht auf die Parallelführung dimensioniert werden.

Da die gemeinsame Baugruppe aus Ecklastsensor und Überlastsicherung an der den Lenkern zugewandten Seite des Lastaufnehmers befestigt ist und sich in den Bereich zwischen den Lenkern hinein erstreckt, ergibt sich eine besonders Platz sparende Anordnung. Dadurch ändern sich die äußeren Dimensionen des Wägesystems durch die Überlastsicherung und den Ecklastsensor nicht.

Da der Ecklastsensor aus senkrecht stehenden Materialdünnstellen, auf denen Dehnungsmessstreifen appliziert sind, besteht, lassen sich diese so im Kraftfluss anordnen, dass sie bei etwa mittig auf die Waagschale aufgelegtem Wägegut auf Zug beansprucht werden. Dadurch erfahren die Materialdünnstellen auch bei außermittig aufgelegtem Wägegut (= Ecklast) nur eine relativ geringe Knickbelastung. Dabei sind mindestens drei Materialdünnstellen notwendig, um Ecklastsignale für die x- und y-Richtung zu generieren.

In einer vorteilhaften Ausgestaltung werden vier Materialdünnstellen mit Dehnungsmessstreifen eingesetzt, die auf den Seiten eines Quadrates angeordnet sind, so lässt sich je eine Halb- oder Völlbrücke für die x- und die y-Richtung verschalten und direkt je ein Ausgangssignal für die Ecklast in x- und y-Richtung generieren. Die Dehnungsmessstreifen lassen sich dabei am einfachsten platzieren, wenn sie auf der Außenseite der Materialdünnstellen positioniert sind.

Eine besonders gute Reproduzierbarkeit der Ecklastsignale ergibt sich, wenn die Materialdünnstellen monolithisch aus einem einzigen Bauteil herausgearbeitet sind. Rutschen in den Kontaktbereichen wird dadurch vermieden.

Bei Wägesystemen mit einem Übersetzungshebel befindet sich dieser meist in der Symmetrieebene des Wägesystems. In der Symmetrieebene steht dadurch nur noch wenig Bauraum zur Verfügung. Vorteilhafterweise wird daher das Federelement der Überlastsicherung in zwei Teile aufgeteilt, die auf beiden Seiten der Symmetrieebene angeordnet sind. Beispielsweise kann das Federelement aus zwei Schraubenfedern bestehen.

Die Erfindung wird im Folgenden anhand der schematischen Figuren beschrieben. Dabei zeigt:
- Fig. 1: das Wägesystem in perspektivischer Darstellung,
- Fig. 2: die Baugruppe mit Ecklastsensor und Überlastsicherung,
- Fig. 3: das Ecklastsensorteil allein und
- Fig. 4: das Waagschalenträgerunterteil alleine.

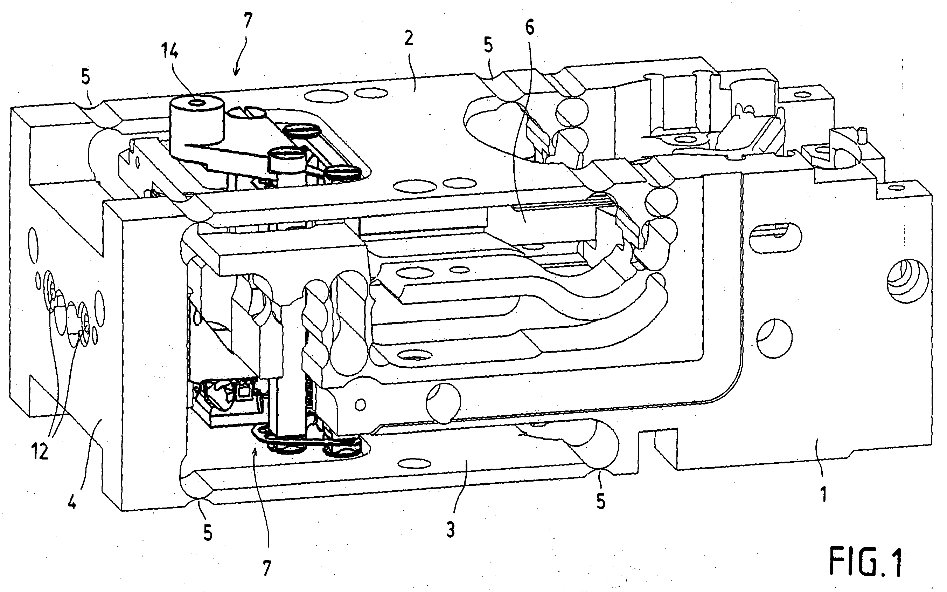

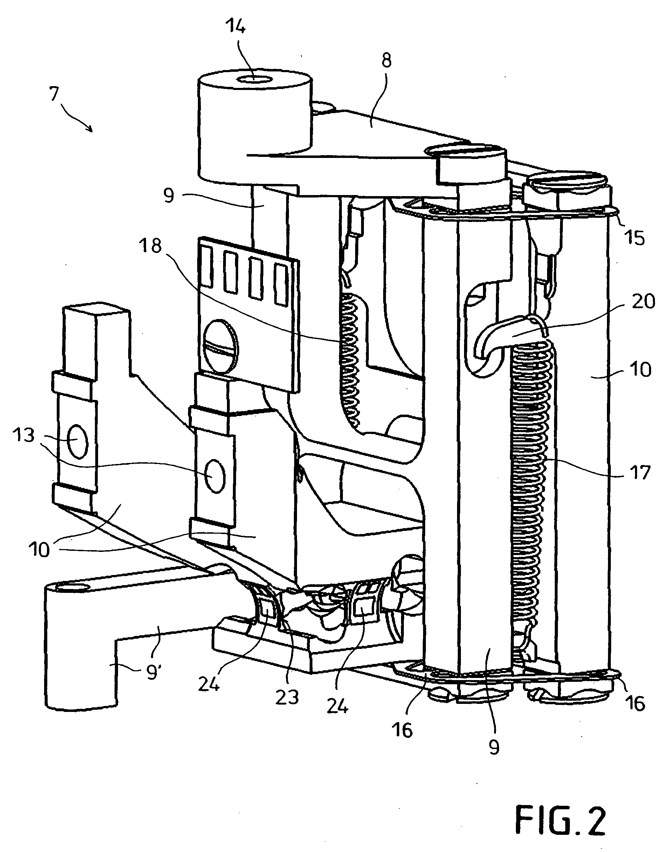

Das Wägesystem in Figur 1 arbeitet nach dem Prinzip der elektromagnetischen Kraftkompensation und beinhaltet eine Lenkerparallelführung und einen Übersetzungshebel. An einem gehäusefesten Bereich 1 sind ein oberer Lenker 2 und ein unterer Lenker 3 gelagert, die gemeinsam einen Lastaufnehmer 4 in senkrechter Richtung beweglich führen. Die als Gelenke wirkenden Materialdünnstellen sind mit 5 bezeichnet. Die zu messende Kraft wird über ein - nicht erkennbares Koppelement und einen Übersetzungshebel 6 von dem nur ein kleiner Teil erkennbar ist, auf eine nicht erkennbare Spule übertragen, die in ein Permanentmagnetsystem hineinragt, das ebenfalls nicht erkennbar ist. Die Teile 1...6 sind monolithisch aus einem einzigen Materialblock herausgearbeitet. - Wägesysteme dieser Art sind allgemein bekannt und müssen daher hier nicht detailliert beschrieben werden. Für die Erfindung wesentlich ist nur die Baugruppe 7 mit Ecklastsensor und Überlastsicherung, die in Figur 1 durch eine dickere Strichstärke hervorgehoben ist und die in Figur 2 noch einmal alleine vergrößert dargestellt ist.

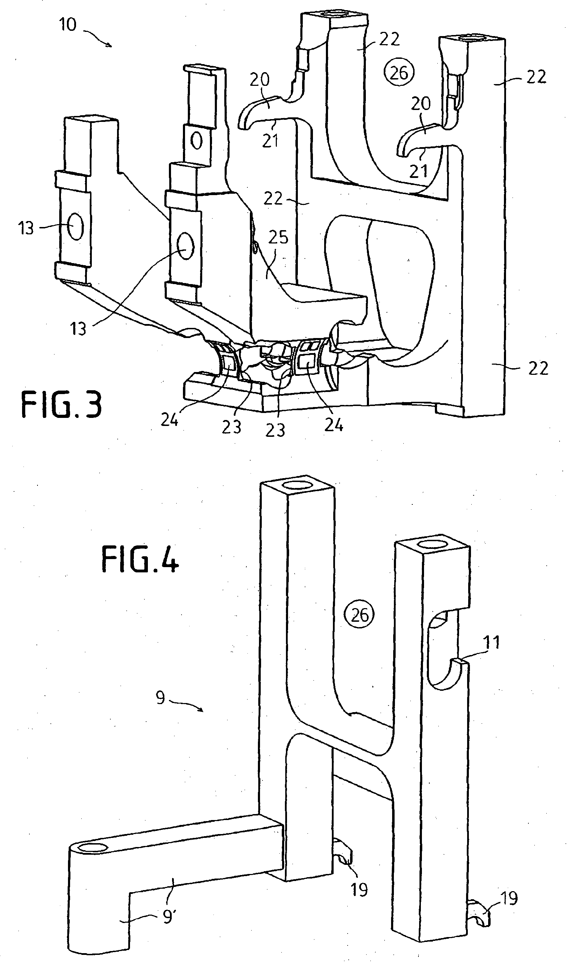

Die Baugruppe 7 besteht im Wesentlichen aus dem Waagschalenträger 8 / 9, der aus dem Waagschalenträgeroberteil 8 und dem Waagschalenträgerunterteil 9 zusammengesetzt ist, und dem Ecklastsensorteil 10. Das Waagschalenträgerunterteil 9 ist zur Erläuterung in Figur 4 noch einmal alleine dargestellt, genauso ist das Ecklastsensorteil 10 in Figur 3 noch einmal alleine dargestellt. Das Ecklastsensorteil 10 der Baugruppe 7 ist mittels Schrauben 12 (Figur 1) und Gewindelöchern 13 am Lastaufnehmer 4 des Wägesystems festgeschraubt. Das Waagschalenträgeroberteil 8 trägt an der Bohrung 14 die - nicht eingezeichnete - Waagschale der Waage. Am Waagschalenträgerunterteil 9 befindet sich ein Ausleger 9', an dem ein Haken für Unterflurwägungen befestigt werden kann. Der Waagschalenträger 8 / 9 und das Ecklastsensorteil 10 sind über zwei Federbleche 15 und 16 in Form einer Hilfsparallelführung und über zwei vorgespannte Schraubenfedern 17 und 18 miteinander verbunden. Die Schraubenfedern 17 und 18 sind im vorkragenden Haken 19 am Waagschalenträgerunterteil 9 und im vorkragenden Haken 20 am Ecklastsensorteil 10 eingehakt. Die Schraubenfedern ziehen dadurch das Waagschalenträgerunterteil 9 nach oben und das Ecklastsensorteil 10 nach unten, sodass die Unterseite 21 des vorkragenden Hakens 20 gegen den Anschlag 11 am Waagschalenträgerunterteil 9 gedrückt wird. Die Vorspannkraft der Schraubenfedern ist dabei so groß, dass die Kontaktkraft am Anschlag ca. 150 % der Nennlast der Waage entspricht. Bis zu diesem Schwellenwert sind der Waagschalenträger 8/9 und das Ecklastsensorteil 10 also quasi starr miteinander gekoppelt, sodass die Gewichtskraft des Wägegutes über die Waagschale, den Waagschalenträger 8 / 9 und das Ecklastsensorteil 10 1:1 auf den Lastaufnehmer 4 des Wägesystems übertragen wird. Erst bei Überschreiten des Schwellenwertes reicht die Vorspannkraft der Schraubenfedern 17 und 18 nicht mehr aus. Bei mehr als 50% Überlast hebt der Anschlag 11 vom vorkragenden Haken 20 ab, der Waagschalenträger 8 / 9 senkt sich weiter ab, während das Ecklastsensorteil 10 und damit der Lastaufnehmer 4 sich nicht mit bewegen. Das Absenken des Waagschalenträgers 8 / 9 und der Waagschale wird dann durch einen - nicht eingezeichneten - Begrenzungsanschlag gestoppt, der zweckmäßigerweise direkt zwischen Waagschale und dem Gehäuse der Waage angeordnet ist und größere Überlasten direkt von der Waagschale auf das Gehäuse überträgt. Dadurch wird bei Überlast nur wenig mehr als der Schwellenwert auf das Wägesystem übertragen und dieses so wirkungsvoll vor Überlast geschützt. Durch die Hilfsparallelführung aus den Federblechen 15 und 16 ist die Ansprechschwelle der Überlastsicherung unabhängig vom Ort der Überlast auf der Waagschale. Auch bei Benutzung des Hakens für Unterflurwägungen am Ausleger 9' bleibt die Überlastsicherung in Funktion, wenn auch am Ausleger 9' bzw. am Waagschalenträgerunterteil 9 ein entsprechender Begrenzungsanschlag vorhanden ist.

Die Funktionalität der Baugruppe 7 als Ecklastsensor ist im Ecklastsensorteil 10 realisiert, wie es in Figur 3 dargestellt ist. Die vom Wägegut auf der Waagschale übertragenen Kräfte einschließlich der bei außermittiger Lage des Wägegutes entstehenden Drehmomente werden durch das Waagschalenträgerunterteil über die beiden vorkragenden Haken 20 und die Federbleche 15, 16 auf das etwas H-förmige Hinterteil 22 des Ecklastsensorteils 10 übertragen. Von diesem Hinterteil 22 gelangen die Kräfte und Momente über vier senkrecht stehende Materialdünnstellen 23 mit applizierten Dehnungsmessstreifen 24 zu dem Vorderteil 25 des Ecklastsensorteils 10 und von dort über die Schraubverbindung 12 / 13 zum Lastaufnehmer 4 des Wägesystems. In Figur 2 und 3 sind dabei nur zwei Materialdünnstellen 23 sichtbar, die beiden anderen liegen symmetrisch dazu, und zwar so, dass die vier Materialdünnstellen 23 in Aufsicht gesehen auf den Seiten eines Quadrates liegen. Die Gewichtskraft des Wägegutes beansprucht die vier Materialdünnstellen im Wesentlichen auf Zug und erzeugt damit ein Gleichtaktsignal an den Dehnungsmessstreifen, während die Drehmomente bei außermittiger Lage zu einem Differenzsignal an den beiden jeweils gegenüberliegenden Dehnungsmessstreifen führt. Dieses Differenzsignal kann dann in bekannter Weise in einer Wheatstoneschen Brückenschaltung vom Gleichtaktsignal getrennt werden und man erhält für die x-Richtung und die für y-Richtung je ein Ausgangssignal des Ecklastsensor. Dieses Ecklastsensorsignal kann dann in bekannter Weise in der Elektronik der Waage zusammen mit den abgespeicherten Ecklastkorrekturfaktoren zu einem Korrekturwert verrechnet werden. Bei einer Anordnung der vier Materialdünnstellen an den Seiten eines Quadrates (in Aufsicht gesehen) ist die Empfindlichkeit bezüglich Ecklastmomente in x- und y-Richtung gleich, sodass die mathematische Auswertung einfach ist. Das gesamte Ecklastsensorteil 10 ist monolithisch aus einem einzigen Metallblock herausgearbeitet. Dadurch werden Verspannungen bei der Montage der Einzelteile und Rutscheffekte an den Verbindungsstellen vermieden und so eine hohe Reproduzierbarkeit der Ecklastsignale erreicht.

Durch die beschriebene Anordnung befindet sich der Ecklastsensor in Kraftflussrichtung von der Waagschale zum Lastaufnehmer hinter der Überlastsicherung. Dadurch gelangen Überlastkräfte nicht bis zu den Materialdünnstellen 23 des Ecklastsensors, sodass die Materialdünnstellen nicht für Überlastkräfte dimensioniert werden müssen. Dadurch können die Materialdünnstellen dünner gemacht werden und die Dehnungsmessstreifen geben ein größeres Signal ab. - Dasselbe gilt bei Vorhandensein mehrerer, richtig angeordneter Überlast-Begrenzungsanschläge auch für die Überlastdrehmomente.

In der gezeichneten vorteilhaften Ausgestaltung der Waage sind für den Ecklastsensor vier Materialdünnstellen 23 mit Dehnungsmessstreifen vorgesehen. Dies ergibt eine besonders einfache elektronische Auswertungsmöglichkeit der Dehnungsmessstreifen-Signale. Selbstverständlich reichen auch drei Materialdünnstellen 23 mit Dehnungsmessstreifen aus, um die Ecklastsignale in x-und y-Richtung zu erhalten. Die drei Materialdünnstellen müssen dann z. B. auf den Seiten eines gleichseitigen Dreiecks angeordnet sein. Jeder Dehnungsmessstreifen müsste mit einem Festwiderstand zu einer Halbbrücke ergänzt werden und so ausgewertet werden. Aus den drei Signalen müssten durch mathematische Operationen dann die x- und y-Ecklastsignale errechnet werden.

Wie man in Figur 1 erkennt, ist die Baugruppe an der den Lenkern zugewandten Seite des Lastaufnehmers 4 angeschraubt und erstreckt sich in den Raum zwischen den Lenkern 2 und 3 hinein. Dadurch benötigt die Baugruppe 7 keinen zusätzlichen Platz im Gehäuse der Waage. Um den in der Symmetrieebene des Wägesystems befindlichen Übersetzungshebel 6 durch die Baugruppe 7 hindurchzuführen, weist daher das Waagschalenträgerunterteil 9 und das Ecklastsensorteil 10 je einen Freiraum 26 auf. Aus dem gleichen Grund sind zwei Schraubenfedern 17 und 18 vorgesehen und diese an den Seiten der Baugruppe 7 angeordnet.

### Bezugszeichenliste:

- 1: gehäusefester Bereich (Fixpunkte)
- 2: oberer Lenker
- 3: unterer Lenker
- 4: Lastaufnehmer
- 5: Materialdünnstelle
- 6: Übersetzungshebel
- 7: Baugruppe mit Ecklastsensor und Überlastsicherung
- 8 / 9: Waagschalenträger
- 8: Waagschalenträgeroberteil
- 9: Waagschalenträgerunterteil
- 9': Ausleger am Waagschalenträgerunterteil
- 10: Ecklastsensorteil
- 11: Anschlag
- 12: Schraube
- 13: Gewindeloch
- 14: Bohrung
- 15 / 16: Hilfsparallelführung
- 15: Federblech
- 16: Federblech
- 17: Schraubenfeder (Federelement)
- 18: Schraubenfeder (Federelement)
- 19: Haken am Waagschalenträgerunterteil 9
- 20: Haken am Ecklastsensorteil 10
- 21: Unterseite des Hakens 20
- 22: Hinterteil des Ecklastsensorteiles 10
- 23: Materialdünnstelle
- 24: Dehnungsmessstreifen
- 25: Vorderteil des Ecklastsensorteiles 10
- 26: Freiraum

## Patentansprüche

1. Oberschalige Waage mit einer Waagschale, mit einem Wägesystem, dessen Lastaufnehmer (4) durch einen oberen Lenker (2) und einen unteren Lenker (3) als Parallelführung in senkrechter Richtung beweglich mit gehäusefesten Fixpunkten (1) des Wägesystems verbunden ist, und mit einer Überlastsicherung, wobei zur Überlastsicherung die Waagschale an einem Waagschalenträger (8/9) befestigt ist, der über eine Hilfsparallelführung (15/16) und über ein vorgespanntes Federelement (17, 18) mit dem Lastaufnehmer (4) verbunden ist, wodurch die Waagschale im zulässigen Wägebereich starr mit dem Lastaufnehmer (4) gekoppelt ist, jedoch bei Überschreiten des zulässigen Wägebereiches nur noch elastisch nachgiebig mit dem Lastaufnehmer gekoppelt ist, und wobei mindestens ein gehäusefester Begrenzungsanschlag vorhanden ist, der die elastische Ausweichbewegung der Waagschale und des Waagschalenträgers bei Überlast begrenzt, **dadurch gekennzeichnet, dass** zwischen Waagschalenträger (8/9) und Lastaufnehmer (4) zusätzlich ein Ecklastsensor vorgesehen ist, dass der Ecklastsensor und die Überlastsicherung eine gemeinsame Baugruppe (7) bilden, wobei der Ecklastsensor in Kraftflussrichtung von der Waagschale zum Lastaufnehmer (4) hinter der Überlastsicherung angeordnet ist und aus mindestens drei senkrecht stehenden Materialdünnstellen (23) besteht, auf denen Dehnungsinessstreifen (24) appliziert sind, und dass die Baugruppe (7) an der den Lenkern (2, 3) zugewandten Seite des Lastaufnehmers (4) befestigt ist und sich in den Raum zwischen den Lenkern (2, 3) hinein erstreckt.

2. Waage nach Anspruch 1, **dadurch gekennzeichnet, dass** der Ecklastsensor aus vier senkrecht stehenden Materialdünnstellen (23) besteht, die die Seiten eines Quadrates bilden, und dass die Dehnungsmessstreifen (24) jeweils auf der Außenseite der Materialdünnstellen (23) angeordnet sind.

3. Waage nach einem der Ansprüche 1 oder 2, **dadurch gekennzeichnet, dass** die Materialdünnstellen (23) des Ecklastsensors zusammen mit den angrenzenden Materialbereichen monolithisch aus einem einzigen Bauteil (10) herausgearbeitet sind.

4. Waage nach Anspruch 1, **dadurch gekennzeichnet, dass** das vorgespannte Federelement durch zwei vorgespannte Schraubenfedern (17, 18) realisiert ist, die sich auf beiden Seiten der vertikalen Symmetrieebene des Wägesystems befinden.

## Claims

1. Upper-pan weighing machine with a weighing pan, a weighing system, the load pick-up (4) of which is connected by an upper guide (2) and a lower guide (3) as parallel guide means with fixed points (1), which are stationary relative to a housing, of the weighing system so to be movable in vertical direction, and overload protecting means, wherein for overload protection the weighing pan is attached to a weighing pan carrier (8/9) connected with the load pick-up (4) by way of auxiliary parallel guide means (15/16) and by way of a biased spring element (17, 18), whereby the weighing pan is rigidly coupled with the load pick-up (4) in the permissible weighing range, but in the case of exceeding the permissible weighing range is coupled only resiliently flexibly with the load pick-up, and wherein at least one limitation abutment, which is stationary relative to the housing and which limits the resilient deflection movement of the weighing pan and the weighing pan carrier in the case of overloading, is present, **characterised in that** a corner load sensor is provided between the weighing pan carrier (8/9) and the load pick-up (4), that the corner load sensor and the overload protecting means form a common subassembly (7), wherein the corner load sensor is arranged downstream of the overload protecting means in the direction of force flow from the weighing pan to the load pick-up (4) and consists of at least three perpendicular thinned-material locations (23) to which strain gauges (24) are applied, and that the subassembly (7) is attached to the side of the load pick-up (4) remote from the guides (2, 3) and extends into the space between the guides (2, 3).

2. Weighing machine according to claim 1, **characterised in that** the corner load sensor consist of a four perpendicular thinned-material locations (23) forming the sides of a square and that the strain gauges (24) are respectively arranged on the outer side of the thinned-material locations (23).

3. Weighing machine according to one of claims 1 and 2, **characterised in that** the thinned-material locations (23) of the corner load sensor together with the adjoining material regions are formed monolithically from a single component (10).

4. Weighing machine according to claim 1, **characterised in that** the biased spring element is realised by two biased helical springs (17, 18) disposed on either side of the vertical plane of symmetry of the weighing system.

## Revendications

1. Balance à plateau supérieur comprenant un plateau de balance, un système de pesage dont le capteur de charge (4) est relié de manière mobile par un bras de suspension supérieur (2) et un bras de suspension inférieur (3) sous la forme d'un guidage parallèle dans le sens vertical à des points fixes (1) du système de pesage fixés à demeure au boîtier, et une sécurité anti-surcharge, le plateau de balance, pour réaliser la sécurité anti-surcharge, étant fixé sur un support (8/9) de plateau de balance qui est relié au capteur de charge (4) par le biais d'un guide parallèle auxiliaire (15/16) et par le biais d'un élément ressort précontraint (17, 18), de sorte que dans la plage de pesage admissible, le plateau de balance est accouplé rigidement au capteur de charge (4), alors qu'en cas de dépassement de la plage de pesage admissible, il n'est plus accouplé au capteur de charge que de manière flexible, et au moins une butée de délimitation fixée à demeure au boîtier étant présente, laquelle limite le mouvement de dérobée élastique du plateau de balance et du support de plateau de balance en cas de surcharge, **caractérisée en ce qu'**il existe en plus, entre le support (8/9) de plateau de balance et le capteur de charge (4), un capteur de charge d'angle qui forme avec la sécurité anti-surcharge un sous-ensemble (7) commun, le capteur de charge d'angle étant disposé derrière la sécurité anti-surcharge dans le sens du flux de forces allant du plateau de balance au capteur de charge (4) et étant constitué d'au moins trois points minces de matière (23) verticaux, sur lesquels des jauges de contrainte (24) sont appliquées, et **en ce que** l'ensemble (7) est fixé sur la face du capteur de charge (4) tournée vers les bras de suspension (2, 3) et s'étend à l'intérieur de l'espace situé entre les bras de suspension (2, 3).

2. Balance selon la revendication 1, **caractérisée en ce que** le capteur de charge d'angle est constitué de quatre points minces de matière (23) verticaux qui forment les côtés d'un carré, et **en ce que** les jauges de contrainte (24) sont disposées chacune sur la face extérieure des points minces de matière (23).

3. Balance selon l'une quelconque des revendications 1 ou 2, **caractérisée en ce que** les points minces de matière (23) du capteur de charge d'angle sont façonnés de façon monolithique à partir d'un seul élément (10) conjointement avec les zones de matière adjacentes.

4. Balance selon la revendication 1, **caractérisée en ce que** l'élément ressort précontraint est réalisé par deux ressorts hélicoïdaux (17, 18) précontraints qui se situent sur les deux faces du plan de symétrie vertical du système de pesage.
